# EUROPEAN PATENT APPLICATION

(11) **EP 3 106 653 A1**
(43) Date of publication of application: **21.12.2016**
(21) Application number: 16163549.5
(22) Date of filing: 01.04.2016
(51) Int. Cl.: F02K 3/06, F02C 7/36

(54) **OFF-SET GEARED TURBOFAN ENGINE**

(30) Priority: 09.06.2015 US 201514734066
(71) Applicant: Rolls-Royce North American Technologies, Inc., Indianapolis, IN 46241 (US)
(72) Inventor: Edwards, Daniel G., Brownsburg, IN Indiana 46112 (US)
(74) Representative: Isarpatent

(57) **Abstract**

A turbofan gas turbine engine (10) includes a first shaft (20) for mounting and rotation of a fan (14), the first shaft including a single stage internal gear (24) mounted on the first shaft aft of the fan. The turbofan engine further includes a second shaft (40) for mounting and rotation of a low pressure compressor and a low pressure turbine, the second shaft including a pinion gear (44) mounted thereon forward of the low pressure compressor. The pinion gear meshes with the single stage internal gear to drive the first shaft and fan. The second shaft is parallel and off-set from the first shaft.

## Description

### Background

The present disclosure relates to gas turbine engines. More particularly, the present disclosure relates to turbofan engines, especially, geared turbofan engines.

Generally, a turbofan engine is a version of a turbojet engine, where the shaft work is used to drive a fan to take in large amounts of air. Part of the air is directed to drive the core of the engine where it will be compressed and combusted. The other part of the air bypasses the core and, therefore, does not undergo combustion. The engine core air is initially directed through a series of stages, such as a low-pressure compressor and a high-pressure compressor where it is compressed. The compressed air flows into a combustor where it is mixed with fuel and ignited, thereby, increasing the pressure and temperature of the combusted mixture to very high levels. The combusted gases exit the combustor and flow through a series of turbine stages, typically comprising a high-pressure turbine and a low-pressure turbine. The gas exits the low-pressure turbine to a nozzle where the gas is combined with the bypass airflow to produce thrust.

There are multiple configurations of turbofan engines. For example, and without limitation, there are single-shaft turbofan engines, two-shaft (also known as "two spool") turbofan engines and three-shaft (also known as "three spool") turbofan engines. The single-shaft turbofan engine comprises a fan and high-pressure ("HP") compressor driven by a single turbine unit, all of which are mounted on a common shaft. In a basic two spool turbofan engine, the fan and low-pressure ("LP") compressor are driven by the LP turbine with the fan, LP compressor and LP turbine all mounted on the same shaft. This is also referred to as the LP spool. The HP spool comprises the HP compressor driven by the HP turbine. Both the HP compressor and turbine are mounted on a second shaft that is concentric to the LP spool shaft. In a three spool configuration, there is a third shaft running concentrically to the LP and HP shafts. An intermediate-pressure ("IP") compressor, which is located between the fan and HP compressor and an IP turbine are mounted on the third shaft, with the IP turbine driving this third shaft.

As discussed above, in a conventional turbofan, the fan, LP compressor and LP turbine are all mounted on the same shaft. In this conventional configuration, the maximum tip speed of the fan limits the rotational speed for the LP shaft and thus the LP compressor and turbine. At high bypass ratios (i.e., the ratio between the mass flow rates of air drawn through a fan disk that bypasses the engine core without undergoing combustion, to the mass flow rate passing through the engine core that is involved in combustion typically being 5:1 and greater), the tip speeds of the LP turbine and LP compressor must be relatively low. The low tip speeds result in a need for extra compressor and turbine stages to keep the average stage loadings and, therefore, overall component efficiencies, at acceptable levels.

Another configuration of turbofan engine is the geared turbofan engine. The geared turbofan addresses the issues associated with the need for "extra" compressor and turbine stages in the high bypass turbofan. In a geared turbofan, the fan is on a separate shaft from the LP compressor/LP turbine shaft. The fan shaft and the LP shaft are concentric and connected via a reduction gearbox. This allows the LP shaft to run at higher rotational speeds, thus resulting in fewer stages in both the LP compressor and LP turbine. The reduction in stages in the LP turbine and LP compressor results in a reduction of engine weight and increased overall engine efficiency.

However, the reduction gearbox, which is typically comprised primarily of a planetary gear system, is relatively heavy and complex and generates a significant amount of heat that needs to be addressed. The resulting weight savings and efficiency increase gained by the use of the planetary gear system is partially offset by the weight and complexity of such systems and the additional systems associated with addressing the heat generated by the planetary gearbox.

What is needed is a novel approach to the geared turbofan that addresses the weight and complexity of the planetary reduction gearbox and minimizes the heat generated by such a system.

### Summary of the Invention

In the off-set geared turbofan of the present disclosure, an internal reduction gear system, such as a single stage internal gear and pinion gear system, is used instead of a complex planetary reduction gear system.

Specifically, the turbofan of the present disclosure comprises a fan section that includes a fan for generating bypass airflow and engine core airflow. The fan is mounted on a first shaft for rotation of the fan. The turbofan also comprises at least one internal gear affixed to the first shaft aft of the fan, an air inlet located aft of the fan for receiving engine core airflow from the fan, a low pressure compressor located near the air inlet wherein the low pressure compressor receives and compresses engine core airflow from the fan and an engine core located aft of the low pressure compressor wherein the engine core receives engine core airflow from the low pressure compressor.

Further, the turbofan of the present disclosure includes a low pressure turbine located aft of the engine core wherein the low pressure turbine receives engine core airflow from the engine core, a second shaft for mounting and rotating the low pressure turbine and low pressure compressor, at least one second gear affixed to the second shaft forward of the low pressure compressor, wherein the at least one second gear meshes with the at least one internal gear to drive the first shaft, and wherein the relationship between the internal gear and the second gear result in the first shaft being offset relative to the second shaft.

### Description of the Figures

FIG. 1 is a non-limiting schematic of a multi-stage off-set geared turbofan gas turbine engine.
FIG. 2 is a non-limiting enlarged schematic of a gearing arrangement of a multi-stage off-set geared turbofan gas turbine engine according to one aspect of the present disclosure.
FIG. 3 is a non-limiting enlargement of the gearing arrangement shown in FIG. 2.

### Detailed Description

For the purposes of promoting an understanding of the principles of the disclosure, reference will now be made to the embodiments illustrated in the drawings and described in the following written specification. It is understood that no limitation to the scope of the disclosure is thereby intended. It is further understood that the present disclosure includes any alterations and modifications to the illustrated embodiments and includes further applications of the principles disclosed herein as would normally occur to one skilled in the art to which this disclosure pertains.

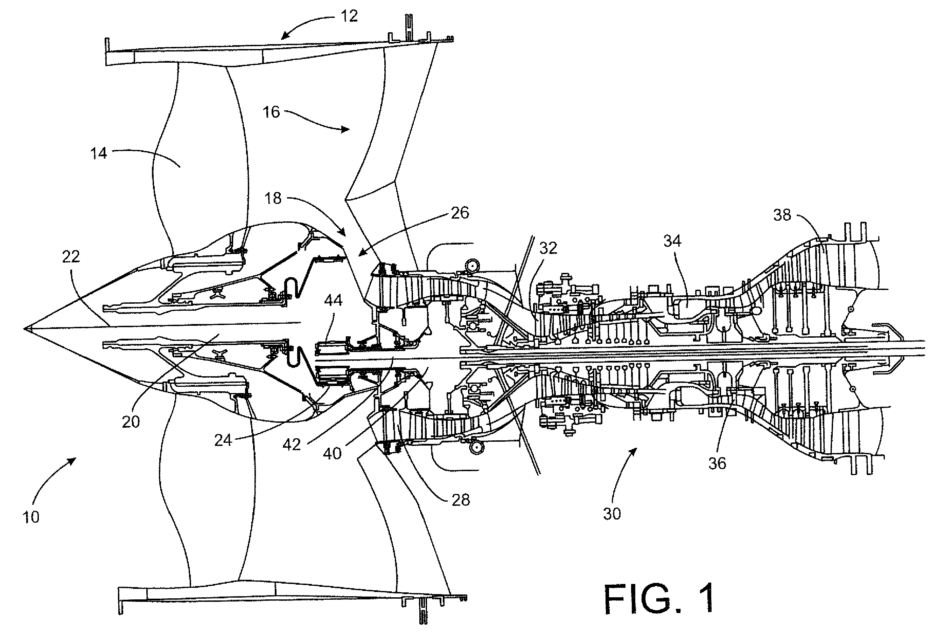

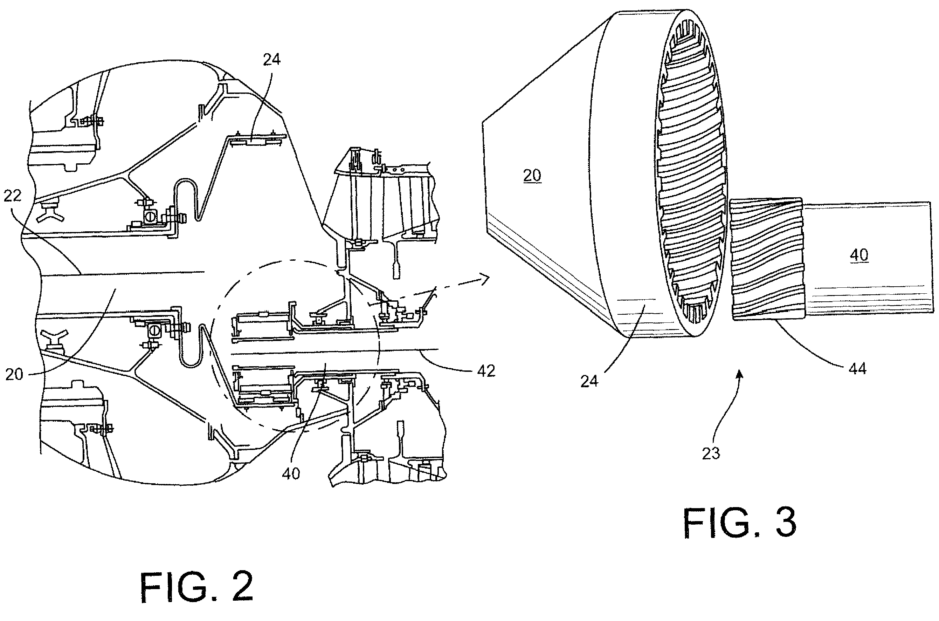

A schematic view of an off-set geared turbo shaft engine 10 is shown in FIG. 1. Engine 10 includes a fan section 12 having a fan 14. In operation, fan 14 generates bypass airflow 16 and engine core airflow 18. The fan 14 is mounted on a first shaft 20 and rotates about the first shaft 20 along a first axis of rotation 22. Referring to FIG. 2, an internal gear system 23 according to the present disclosure includes internal gear 24 mounted on the shaft 20 aft of fan 14, as described in more detail herein. Preferably, internal gear 24 is a single stage internal gear, however, it should be understood that multistage internal gears fall within the scope of this disclosure.

Aft of fan 14 is an air inlet 26 for directing and receiving engine core airflow 18. The off-set geared turbofan engine further includes a low-pressure ("LP") compressor 28 located aft of the air inlet 26. Next, in sequence, is an engine core 30, which typically includes a high pressure ("HP") compressor 32, a combustor 34 and a HP turbine 36. Located aft of the engine core 30 is a low pressure turbine 38. The LP compressor 28 and LP turbine 38 are mounted for rotation about a second axis of rotation 42 on a second shaft 40. The internal gear system 23 of the present disclosure further includes a second gear 44 that is affixed to the second shaft 40 forward of the LP compressor 28.

Referring back to FIG. 1, the second axis of rotation 42 is along a centerline that runs the length of the compressor section, engine core and turbine section of engine 10. Compressor section includes the LP compressor 28 and the HP compressor 32. The turbine section of engine 10 includes the HP turbine 36 and the LP turbine 38. In a three shaft turbofan engine, also referred to as a three spool configuration, HP compressor 32 and HP turbine 36 are mounted on a third shaft that is concentric to second shaft 40. In some embodiments of a three spool turbofan engine, the second shaft and third shaft are counter-rotating.

In operation, fan 14 rotates about first shaft 20 along first axis of rotation 22. Rotation of fan 14 generates bypass airflow 16, which does not flow through engine core 30 and therefore is not combusted. Rotation of fan 14 also generates engine core airflow 18, which enters air inlet 26 and flows into the LP compressor 28. LP compressor 28 typically has multiple stages wherein the engine core airflow 18 is progressively compressed to higher pressure in each subsequent stage. Engine core airflow 18 exits the LP compressor 28 and flows into the HP compressor 32, also typically including multiple stages, where engine core airflow 18 is further compressed to higher pressure.

Engine core airflow 18 exits the HP compressor and enters the combustor 34 where it is mixed with fuel, ignited and burned. The resultant high pressure engine core airflow 18 is expanded sequentially through HP turbine 36 and then LP turbine 38. The expanding engine core airflow 18 causes LP turbine 38 to rotate about the second shaft 40 thereby driving the rotation of LP compressor 28. According to one aspect of the present disclosure, the second gear 44 of second shaft 40 meshes with the internal gear 24 of first shaft 20 thereby driving the rotation of first shaft 20 and fan 14. In this configuration, second shaft 40 is concentric with second axis of rotation 42 along the centerline of the engine core. Second shaft 40 is parallel to but radially off-set from first shaft 20, with its first axis of rotation 22 concentric with the centerline of the fan 14. This arrangement results in the fan 14 being off-set from the centreline of the engine core creating an asymmetrical relationship between the air inlet 26 and the centerline running through the engine core 30. In one embodiment, the first gear 24 may be in the form of a ring gear, while the second gear 44 may be in the form of a pinion gear having spur, helical, double helical or spiral teeth.

The internal gear system 23 of the present disclosure has many advantages over the current state-of-the-art geared turbofan engines which utilize an epicycle gear train, such as a planetary gear system. The internal gear system of the present invention is less complex having significantly fewer parts and is therefore much lighter. Less weight results in better fuel economy. Moreover, the internal gear system 23 generates less heat and therefore does not require the additional complexities and weight of the systems needed to address the heat generated by the epicycle gear train. Additionally, use of the internal gear system 23 disclosed herein results in a significant reduction in gear inefficiencies over epicycle gear systems and external gear systems. The reduced complexity (i.e. fewer parts), reduced weight and reduced heat generation of the present invention will result in improved fuel efficiency, longer life and improved reliability of the geared turbofan engine as compared to geared turbofan engines employing epicycle gearing systems.

It should be understood that relative positional terms such as "aft" and "forward" and the like are with reference to the normal operational attitude of the vehicle in which the geared turbofan engine is installed and should not be considered otherwise limiting.

The present invention has been described in an illustrative manner. It is to be understood that the terminology that has been employed herein is intended to be in the nature of words of description rather than word of limitation. While there have been described herein, what are considered to be preferred and exemplary embodiments of the present invention, other modifications of the invention shall be apparent to those skilled in the art from the teachings herein and, it is, therefore, desired to be secured in the appended claims all such modification as fall within the true spirit and scope of the invention.

## Claims

1. A turbofan engine comprising:
a fan mounted on a first shaft for rotation of the fan about a first axis of rotation;
at least one internal gear mounted on the first shaft aft of the fan;
a low pressure compressor located aft of the fan;
an engine core located aft of the low pressure compressor;
a low pressure turbine located aft of the engine core;
a second shaft for rotatably supporting the low pressure turbine and low pressure compressor about a second axis of rotation;
at least one second gear affixed to the second shaft forward of the low pressure compressor;
wherein the at least one second gear meshes with the at least one internal gear to drive the first shaft; and
wherein the first axis of rotation is parallel to and radially off-set from the second axis of rotation.

2. The turbofan engine of claim 1 wherein the at least one internal gear is a single stage internal gear.

3. The turbofan engine of claim 1 wherein the at least one second gear is a pinion gear.

4. The turbofan engine of claim 1 wherein the fan is a single stage fan.

5. The turbofan engine of claim 1 wherein the engine core comprises a high pressure compressor located aft of the low pressure compressor, a combustor located aft of the high pressure compressor and a high pressure turbine located aft of the combustor.

6. A turbofan engine comprising:
a fan mounted on a first shaft for rotation of the fan about a first axis of rotation;
a low pressure compressor located aft of the fan;
an engine core located aft of the low pressure compressor;
a low pressure turbine located aft of the engine core;
a second shaft for rotatably supporting the low pressure turbine and low pressure compressor about a second axis of rotation parallel to and radially offset from said first axis;
an offset single stage gear arrangement between said first shaft and said second shaft whereby rotation of said second shaft drives said first shaft.

7. The turbofan engine of claim 6 wherein the single stage gear arrangement includes an internal gear coupled to the first shaft and a pinion gear coupled to the second shaft.

8. The turbofan engine of claim 7 further comprising an air inlet aft of the fan for directing airflow into the low pressure compressor wherein the air inlet is asymmetrical to a centerline of the engine core.

9. The turbofan engine of claim 8 wherein the engine core comprises a high pressure compressor aft of the low pressure compressor, a combustor aft of the high pressure compressor and a high pressure turbine aft of the combustor.

10. A turbofan engine comprising:
a fan section comprising a fan for generating a bypass airflow and an engine core airflow, the fan mounted on a first shaft for rotation of the fan;
at least one internal gear affixed to the first shaft aft of the fan;
an air inlet located aft of the fan for receiving engine core airflow from the fan;
a low pressure compressor located near the air inlet wherein the low pressure compressor receives and compresses engine core airflow from the fan;
an engine core located aft of the low pressure compressor wherein the engine core receives engine core airflow from the low pressure compressor;
a low pressure turbine located aft of the engine core wherein the low pressure turbine receives engine core airflow from the engine core;
a second shaft for mounting and rotating the low pressure turbine and low pressure compressor;
at least one second gear affixed to the second shaft forward of the low pressure compressor;
wherein the at least one second gear meshes with the at least one internal gear to drive the first shaft; and
wherein the relationship between the at least one internal gear and the at least one second gear results in the first shaft being radially offset relative to the second shaft.

11. The turbofan engine of claim 10 wherein the second shaft comprises an axis of rotation about a centerline of the engine core and the air inlet is asymmetrical to said centerline.

12. The turbofan engine of claim 10 wherein the at least one internal gear is a single stage internal gear.

13. The turbofan engine of claim 12 wherein the at least one second gear is a pinion gear.

14. The turbofan engine of claim 10 wherein the fan is a single stage fan.

15. The turbofan engine of claim 10 wherein the engine core comprises a high pressure compressor located aft of the low pressure compressor, a combustor located aft of the high pressure compressor and a high pressure turbine located aft of the combustor.
